# EUROPEAN PATENT APPLICATION

(11) **EP 2 733 708 A1**
(43) Date of publication of application: **21.05.2014**
(21) Application number: 12834965.1
(22) Date of filing: 04.04.2012
(51) Int. Cl.: H01B 13/012, B60R 16/02, H01B 7/00, H02G 3/04

(54) **WIRE HARNESS PRODUCTION METHOD AND WIRE HARNESS**

(30) Priority: 29.09.2011 JP 2011214250
(71) Applicant: Sumitomo Wiring Systems, Ltd., Yokkaichi-shi, Mie 510-0058 (JP)
(72) Inventor: HAMAMOTO, Isamu, Yokkaichi-shi Mie 510-0058 (JP); SHIRAFUJI, Yukihiro, Yokkaichi-shi Mie 510-0058 (JP); MIZUHIRA, Takeshi, Yokkaichi-shi Mie 510-0058 (JP)
(74) Representative: Takeuchi, Maya
(86) International application number: PCT/JP2012/059147
(87) International publication number: WO 2013/046769

(57) **Abstract**

An object is to inhibit heating of a wire as much as possible during hot-pressing of a nonwoven material around the wire. A portion of a wire harness main body is covered by a nonwoven material. The nonwoven material is placed in a mold in a state where at least an end portion of the nonwoven material projects from the mold. The nonwoven material is hot-pressed in the mold to form a protection member. Thereby, a wire harness is produced in which the nonwoven material is hot-pressed at least in a portion of the wire harness main body.

## Description

### [Technical Field]

The present invention relates to a technology to protect a wire harness.

### [Background Art]

Patent Literature 1 discloses a technology to form a protector around a flat circuit body. The protector is formed by placing a flat circuit body between two covering bodies composed of a nonwoven fabric, thermoplastic material that includes a thermoplastic felt or foaming agent, and by heating and pressing the two covering bodies to adhere them to the flat circuit body and to weld portions where the two covering bodies are in contact.

### [Citation List]

### [Patent Literature]

Patent Literature 1: Japanese Patent Laid-Open Publication No. 2003-197038

### [Summary of Invention]

### [Technical Problem]

In the technology disclosed in Patent Literature 1, however, a portion of the flat circuit body extending from the thermoplastic material may also be heated during heating and pressing of the thermoplastic material. Particularly, when the thermoplastic material is shrunk into an inner area of a mold due to heating, the portion of the flat circuit body extending from the thermoplastic material is drawn into the mold and is likely to be heated.

In view of the above, the present invention is intended to inhibit heating of a wire as much as possible during hot-pressing of a nonwoven material around the wire.

### [Solution to Problem]

To address the circumstance above, a first aspect provides a method of producing a wire harness by hot-pressing a nonwoven material in at least a portion of a wire harness main body to form a protection member. The method includes (a) a process of covering a portion of the wire harness main body with the nonwoven material; (b) a process of placing the nonwoven material in a mold in a state where at least an end portion of the nonwoven material projects from the mold; and (c) a process of hot-pressing the nonwoven material in the mold to form the protection member.

A second aspect provides the method of producing the wire harness according to the first aspect, in which, in the process (c), the nonwoven material is hot-pressed in the mold in a state where a position regulating piece is provided in a position opposite to at least the end portion of the nonwoven material projecting from the mold.

Furthermore, to address the circumstance above, a third aspect provides a wire harness including a wire harness main body and a protection member formed by hot-pressing a nonwoven material in a state where a portion of the wire harness main body is covered by the nonwoven material. At least an end portion of the protection member is pushed inward without being hot-pressed and is formed into a projecting end portion projecting toward an outer periphery.

A fourth aspect provides the wire harness according to the third aspect, further including at least one component for fixation to a vehicle body attached to an intermediate portion of the protection member.

A fifth aspect provides the wire harness according to the fourth aspect, in which the projecting end portion is provided to each of two end portions of the protection member.

A sixth aspect provides the wire harness according to the fifth aspect, in which only one component for fixation to the vehicle body is provided.

A seventh aspect provides the wire harness according to one of the fourth to sixth aspects, in which a projection length of the projecting end portion toward the outer periphery of the protection member is same as a projection support length of the component for fixation to the vehicle body.

### [Advantageous Effects of Invention]

According to the method of producing the wire harness of the first aspect, the nonwoven material placed in the mold is hot-pressed to form the protection member in the state where at least the end portion of the nonwoven member projects from the mold. Thus, wires are inhibited from being heated as much as possible.

According to the second aspect, a projection length of the protection member, which is formed by hot-pressing at least the end portion of the nonwoven material projecting from the mold, can be controlled by the position regulating piece.

According to the wire harness of the third aspect, at least the end portion of the protection member is pushed inward without being hot-pressed and is formed into the projecting end portion projecting toward the outer periphery. Thus, wires of the wire harness main body projecting from the end portion can be inhibited from being heated as much as possible.

According to the fourth aspect, the protection member is supported by the component for fixation to the vehicle body at a distance from a peripheral wall of a path. Furthermore, in the projection end portion of the projection member as well, the protection member is regulated to be positioned toward the center by the projection length of the projecting end portion from the peripheral wall of the path. Thus, the protection member can be supported in an orientation in line with the path as much as possible.

According to the fifth aspect, the intermediate portion of the protection member can be supported by the component for fixation to the vehicle body in a position at a distance from the peripheral wall of the path. Furthermore, in the two end portions of the projection member as well, the protection member is regulated to be positioned toward the center by the projection length of the projecting end portions from the peripheral wall of the path. Thus, the protection member can be supported in an orientation in line with the path as much as possible.

In both cases where the projecting end portions are provided in the two end portions of the protection member as in the fifth aspect and where only one component for fixation to the vehicle body is provided as in the sixth aspect, the protection member can be supported more reliably in the orientation in line with the path.

According to the seventh aspect, the distance between the protection member and the peripheral wall can be the same in the portion supported by the component for fixation to the vehicle body and in the portion where the projecting end portion is provided. Thus, the protection member can be supported more reliably in the orientation in line with the path.

### [Brief Description of Drawings]

[Fig. 1] A schematic side view of a wire harness according to an embodiment.
[Fig. 2] A schematic plan view of the wire harness.
[Fig. 3] A view illustrating a position production process of a wire harness.
[Fig. 4] A view illustrating the position production process of the wire harness.
[Fig. 5] A view of an end portion a protection member.
[Fig. 6] A view illustrating an example in which a position regulating piece is provided to an end portion of a mold.
[Fig. 7] A view illustrating an example in which the position regulating piece is provided to the end portion of the mold.

### [Description of Embodiments]

A wire harness according to an embodiment and a method of producing the same are described below.

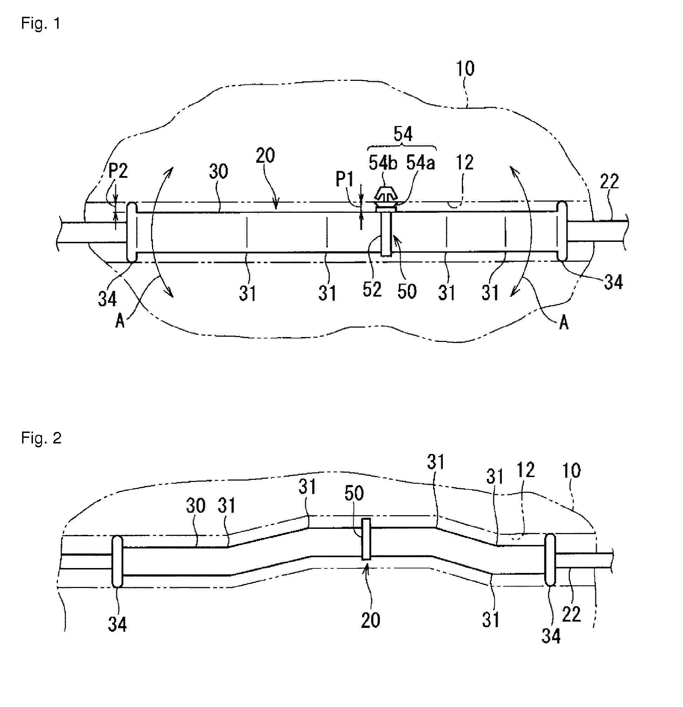

Fig. 1 is a schematic side view of a wire harness 20; Fig. 2 is a schematic plan view of the wire harness 20. In Figs. 1 and 2, a vehicle body portion 10 to which the wire harness 20 is attached is indicated by a dashed-two dotted line.

The wire harness 20 has a wire harness main body 22 and a protection member 30.

The wire harness main body 22 has a configuration in which a plurality of electric wires are bundled along a wiring path in a vehicle to be wired. The electric wires are a wiring material that electrically connects various electric devices in a vehicle and the like. The wire harness main body 22 may include an optical cable and the like.

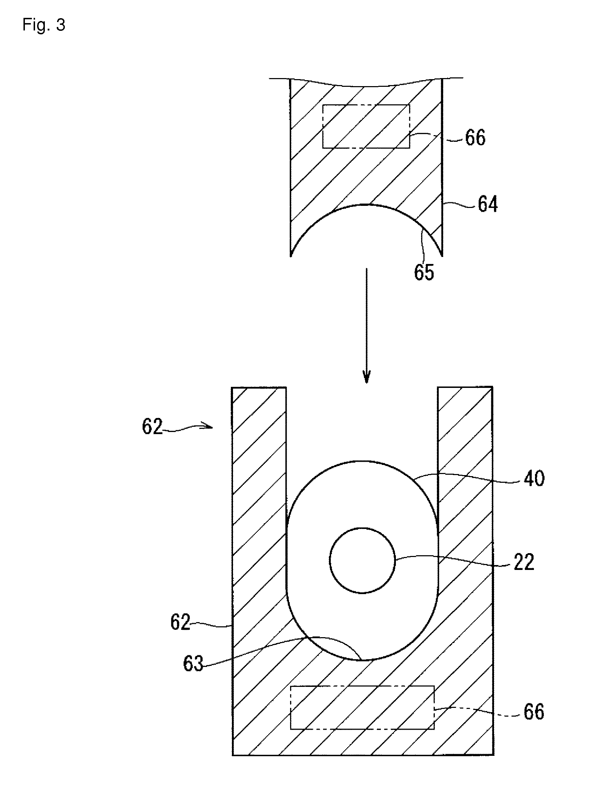

The protection member 30 is formed by hot-pressing a nonwoven material 40 in a state where the nonwoven material 40 partially covers the wire harness main body 22 (refer to Fig. 3). The nonwoven fabric 40 is a material that can be hardened in a heating process. The hot-pressing herein refers to a process in which the nonwoven material 40 is heated and pressed against a mold to be formed into a predetermined shape. The heating and forming into a predetermined shape may be performed simultaneously, and alternatively may be performed separately in sequence. The nonwoven material 40 and an example of the hot-pressing will be described later in detail.

In the present embodiment, an intermediate portion excluding two end portions of the protection member 30 is hot-pressed into a shape that fits a predetermined wiring path. Thus, the intermediate portion of the protection member 30 can be maintained in the shape that fits the predetermined wiring path. The predetermined wiring path may have a linear shape or a bent shape. In the present embodiment, the intermediate portion of the protection member 30 is formed into a bent shape so as to be depressed to one side by four bent portions 31 (slightly curved bent portions herein). The intermediate portion of the protection member 30, which is hardened by the hot-pressing, also protects the inner wire harness main body 22.

The protection member 30 herein has an elliptical shape in a cross section as an example, but may have a circular, square, or triangular shape.

The two end portions of the protection member 30 are pushed inward (compressed) without being hot-pressed and are provided as projecting end portions 34 projecting toward an outer periphery. Specifically, the intermediate portion of the protection member 30 is hot-pressed and is thus hardened in a compressed state. Thus, the hot-pressed intermediate portion of the protection member 30 has a smaller cross-sectional size than in a pre-hot-pressing state. In contrast, the two end portions of the protection member 30, which remain in an original state and are not compressed toward the inner periphery, project toward the outer periphery in an entire circumferential direction relative to the intermediate portion of the projecting member 30. These portions are the projecting end portions 34.

The wire harness main body 22 extends further to an exterior from the projecting end portions 34 in the two end portions of the protection member 30.

In the present embodiment, the projecting end portions 34 are provided in the two end portions of the protection member 30. However, the projecting end portion 34 may be provided in one of the end portions of the protection member 30.

Furthermore, a clamp with a bundling band 50 is provided in the intermediate portion of the protection member 30 as a component for fixation to a vehicle body. The clamp with the bundling band 50 is configured by combining a bundling band portion 52 and a clamp portion 54. The bundling band portion 52 can be configured in various ways, including a similar configuration of a known bundling band fixable in a state of being wound around the outer periphery of the protection member 30. The clamp portion 54 can be configured in various ways, including a similar configuration of a known clamp component in which an engagement portion 54b is provided in a central portion of a disc-shaped portion 54a that serves as a disc spring, the engagement portion 54b being capable of engaging and locking to an attachment hole in the vehicle body portion 10.

In a state where the bundling band portion 52 of the clamp with the bundling band 50 is wound around the outer periphery of the protection member 30, the engagement portion 54b is inserted into the attachment hole in the vehicle body portion 10 and a peripheral portion of the attachment hole in the vehicle body portion 10 is placed between the disc-shaped portion 54a and the engagement portion 54b. Then, the protection member 30 is attached and fixated to the vehicle body portion 10 by the clamp with the bundling band 50.

The clamp with the bundling band 50 may be replaced by a clamp having a square plate portion extending from a head to a side of the clamp portion 54 (commonly called sleeve clamp), or the like. Furthermore, the clamp with the bundling band 50 is not required to be attached to the protection member 30. When the clamp with the bundling band 50 is attached to the protection member 30, one or more clamps with the bundling band 50 may be attached. In the example herein, only one clamp with the bundling band 50 is attached to the protection member 30.

An exemplary method of producing the wire harness 20 is described.

First, a portion of the wire harness main body 22 is covered by the nonwoven material 40 (refer to Fig. 3).

A material that can be hardened in a heating process can be used as the nonwoven material 40, as described above. Such a nonwoven material 40 can contain an elementary fiber and an adhesive resin (also referred to as a binder) intertwined therewith. The adhesive resin has a lower melting point (for example, 110°C to 115°C) than that of the elementary fiber. The nonwoven material 40 is heated at a processing temperature lower than the melting point of the elementary fiber and higher than the melting point of the adhesive resin, and then the adhesive resin melts and seeps into the elementary fiber. Thereafter, the temperature of the nonwoven material 40 lowers below the melting point of the adhesive resin, and then the adhesive resin is solidified in a state where the elementary fibers are bound together. Thus, the nonwoven material 40 becomes harder than in a pre-heating state and is maintained in a shape formed at the time of heating. The melted resin also seeps into a contact portion of the nonwoven material 40, and thus the contact portions of the nonwoven material 40 are bonded together.

Any fiber capable of maintaining a fibrous state at the melting point of the adhesive resin can be used as the elementary fiber. Other than a resin fiber, various fibers, including a glass fiber, can be used. Furthermore, a thermoplastic resin fiber, which has a melting point lower than the elementary fiber, can be used as the adhesive resin. The adhesive resin may be granular or fibrous. Alternatively, a binder fiber may be provided by forming an adhesive resin layer around an outer periphery of a core fiber and be intertwined with the elementary fiber. The core fiber in this case can be the same material as the elementary fiber.

An exemplary combination of the elementary fiber and the adhesive resin may include a resin fiber composed of PET (polyethylene terephthalate) as the elementary fiber and a copolymer resin composed of PET and PEI (polyethylene isophthalate) as the adhesive resin. In this case, the melting point of the elementary resin is approximately 250°C, while the melting point of the adhesive resin is 110°C to 150°C. Thus, when the nonwoven material 40 is heated at a temperature of 110°C to 250°C, the adhesive resin melts and seeps into the elementary fiber, which does not melt and holds a fibrous shape. When the temperature of the nonwoven material 40 then lowers below the melting point of the adhesive resin, the adhesive resin is solidified in a state where the elementary fibers are bound together, and the nonwoven material 40 is hardened and maintained in a shape formed at the time of heating. When the nonwoven materials 40 overlap at this time, the nonwoven materials 40 are bound by the adhesive resin.

To cover a portion of the wire harness main body 22 with the nonwoven material 40, for example, a sheet-shaped nonwoven material 40 (nonwoven fabric) can be formed into a square shape and the square-shaped nonwoven material 40 can be wrapped around the wire harness main body 22 at least once. Alternatively, a sheet-shaped nonwoven material 40 (nonwoven fabric) can be formed into a strip shape and the strip-shaped nonwoven material 40 can be spirally wrapped around the wire harness main body 22.

Subsequently, the nonwoven material 40 covering the wire harness main body 22 is placed in a mold 60.

An example of the mold 60 is described herein, which has a lower mold 62 and an upper mold 64.

The lower mold 62, which is a member formed of metal or the like having excellent heat conductance, has a lower mold surface 63 on one main surface (upper surface). The lower mold surface 63 is formed into substantially a groove shape open upward and to two sides. The lower mold surface 63 has a shape bending and extending according to a predetermined wiring path. In the present embodiment, a bottom portion of the lower mold surface 63 has a semicircular shape in cross section. Of course, the lower mold surface 63 may have another shape, for example, a rectangular shape in cross section.

The upper mold 64, which is a long member formed of metal or the like having excellent heat conductance, has, on a lower surface thereof, an upper mold surface 65 having an arcuate groove shape in cross section. The upper mold surface 65 has a width capable of closing the upper opening of the lower mold surface 63 and being placed in the lower mold surface 63. The upper mold surface 65 has a shape bending and extending according to the bending shape of the lower mold surface 63.

The upper mold surface 65 is placed in the lower mold surface 63, and then a space is defined between the upper mold surface 65 and the lower mold surface 63 to enable the cross-sectionally elliptical-shaped protection member 30 to be formed. A heating mechanism 66, such as a heater or the like, is provided to the lower mold 62 and upper mold 64.

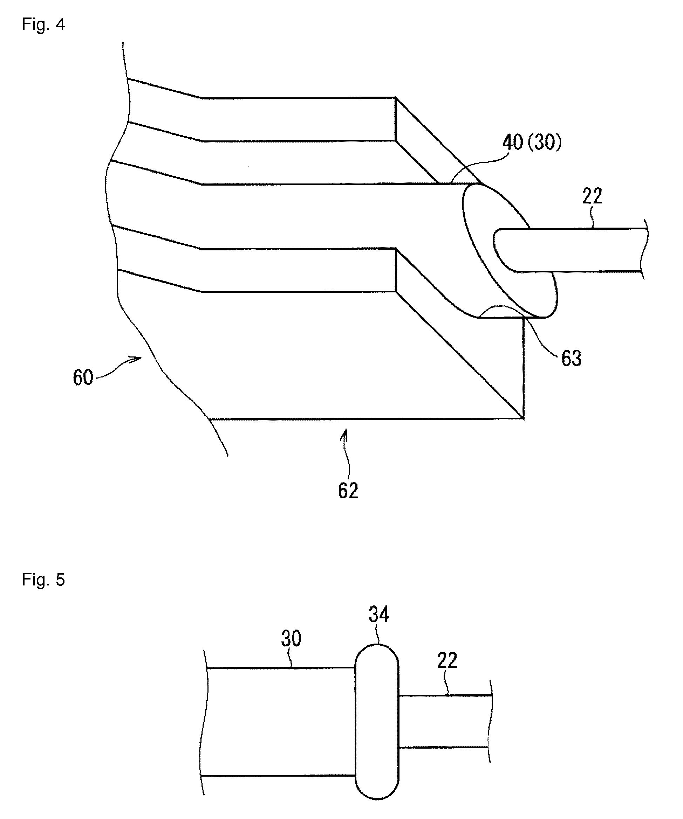

With respect to Fig. 4, the nonwoven material 40 covering the wire harness main body 22 is placed in the lower mold surface 63 of the lower mold 62 in a state where two end portions of the nonwoven material 40 protrude to an exterior from the two end openings of the lower mold 62.

Thereafter, the upper mold surface 65 of the upper mold 64 is inserted into the lower mold surface 63. At this time, the upper mold surface 65 is located in an area above the lower mold surface 63. Thus, an intermediate portion of the nonwoven material 40 is placed in the mold 60 between the lower mold surface 63 and the upper mold surface 65 in a state where the two end portion of the nonwoven material 40 covering the wire harness main body 22 protrude from the two end openings of the mold 60.

In this state, the nonwoven material 40 is hot-pressed in the mold 60. Specifically, the nonwoven material 40 is heated in a state where the nonwoven material 40 is being pressured between the lower mold surface 63 and the upper mold surface 65. The nonwoven material 40 is cooled thereafter. The intermediate portion of the nonwoven material 40 is then hardened in a shape defined by the lower mold surface 63 and the upper mold surface 65 and is maintained in a predetermined shape. Furthermore, the nonwoven material 40 is bonded between layers, and thus a state covering the wire harness main body 22 is maintained.

Since the two end portions of the nonwoven material 40 are not hot-pressed, the projecting end portions 34 are formed which project toward the outer periphery relative to the intermediate portion of the protection member 30. Thereby, the protection member 30 is produced. The nonwoven material 40 may be cooled when removed from the lower mold surface 63 after the heating and pressuring.

According to the wire harness 20 configured as above and the method of producing the same, the protection member 30 can be produced by hot-pressing the nonwoven material 40 in the mold 60 in a state where the end portions of the nonwoven material 40 protrude from the mold 60. Thus, the wire harness main body 22, which extends further to the exterior than the projecting end portions 34 of the protection member 30, is unlikely to be brought into direct contact with the mold 60. This inhibits heating of electric wires as much as possible included in the wire harness main body 22.

In addition, when the wire harness 20 is assumed to be mounted in the vehicle body portion 10, an advantage is that the wire harness 20 can be mounted in an orientation in line with a wiring path 12 of the vehicle body portion 10 as accurately as possible.

Specifically, with reference to Figs. 1 and 2, the thin and long groove-shaped wiring path 12 is provided in the vehicle body portion 10. The intermediate portion of the protection member 30 of the wire harness 20 is going to be attached and fixated to the vehicle body portion 10 by using the clamp with the bundling band 50. In this case, the thin and long protection member 30 may be inclined in the wiring path 12 around a position supported by the clamp with the bundling band 50 (refer to arrow A in Fig. 1). Then, a direction to pull out the wire harness main body 22 from the protection member 30 may be inclined relative to the wiring path 12, thus possibly causing an unwanted bent portion in the wire harness main body 22.

The projecting end portions 34 are therefore provided in the end portions (two end portions herein) of the protection member 30 as described above. This regulates the end portions of the protection member 30 toward the center of the wiring path 12 by an amount of protrusion of the projecting end portions 34. Thus, the protection member 30 can be supported in an orientation in line with the center axis of the wiring path 12 as much as possible.

Even in a case where the projecting end portion 34 is provided only in one end portion of the protection member 30, the end portion can be regulated toward the center of the wiring path 12 similar to the above. Thus, compared to a case without the projecting end portion 34, the protection member 30 can be supported in the orientation more in line with the center axis of the wiring path 12.

In addition, the projecting end portion 34 protrudes to the exterior in the entire outer peripheral direction of the protection member 30. This allows the projecting end portion 34 to be in contact with a peripheral wall around the wiring path 12 in the entire outer periphery thereof. Thus, the protection member 30 can be brought closer to the center axis of the wiring path 12 in the entire circumferential direction.

The above description works more effectively in a case where only one clamp with the bundling band 50 is attached to the protection member 30 since the protection member 30 tends to be inclined relative to the wiring path 12. Of course, it is also effective in a case where a plurality of clamps with the bundling bands 50 are attached to the protection member 30.

To place the protection member 30 as accurately as possible along the wiring path 12 as above, a projection support length P1 of the clamp with the bundling band 50 is preferably the same as a projection length P2 of the projecting end portion toward the outer periphery of the protection member 30. The projection support length P1 of the clamp with the bundling band 50 refers to a distance between a surface of the vehicle body portion 10 and the protection member 30 in a state where the clamp 50 is attached and fixated to the vehicle body portion 10. The projection support length P1 herein is a distance between an edge of the disc-shaped portion 54a and an inner peripheral portion on the clamp portion 54 side of the bundling band portion 52.

With the lengths above defined the same, a distance between a peripheral wall of the vehicle body portion 10 to which the clamp with the bundling band 50 is attached and fixated and an outer surface of the hot-pressed intermediate portion of the protection member 30 can be provided the same in a portion to which the clamp with the bundling band 50 is attached and fixated and in a portion proximate to the projecting end portion 34. Thus, the protection member 30 can be placed in line with the wiring path 12 as accurately as possible.

The projection length P2 of the projecting end portion toward the outer periphery of the protection member 30 can be defined as below, for example.

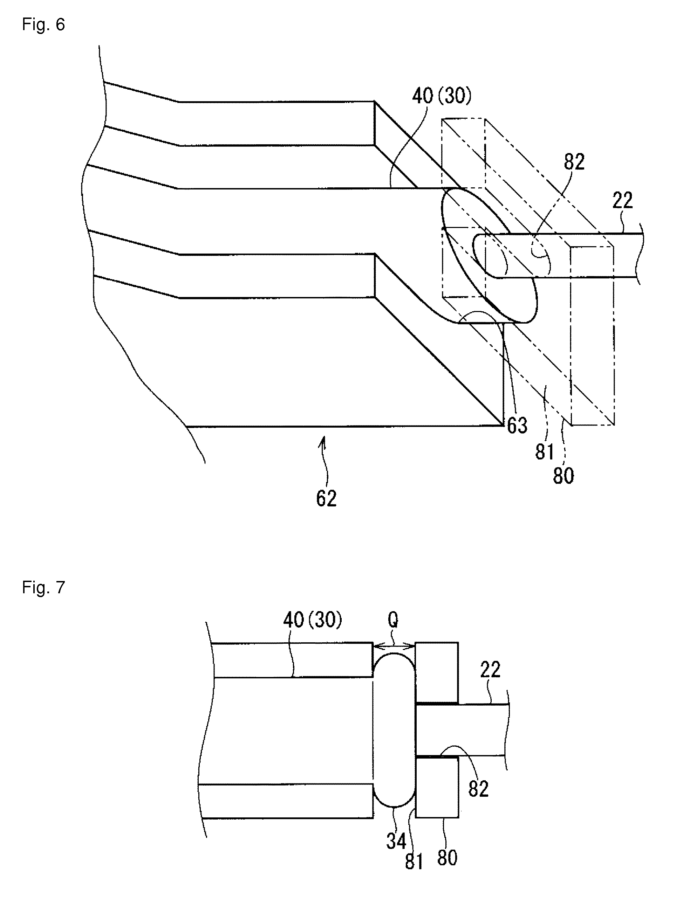

Specifically, with reference to Fig. 6, a position regulating piece 80 is provided in an exterior of the end portion opening of the mold 60 (lower mold 62). In other words, the position regulating piece 80 is provided in a position opposite to the end portion of the nonwoven material 40 projecting from the mold 60. The position regulating piece 80 has a regulating surface 81 opposite to the end portion opening of the mold 60 (lower mold 62) and a recess 82 through which the wire harness main body 22 can be inserted. No heating mechanism is incorporated in the position regulating piece 80. The end portion of the nonwoven material 40 projecting from the mold 60 is pressed against the regulating surface 81 of the position regulating piece 80, and the wire harness main body 22 extending from the protection member 30 is inserted through the recess 82 to be guided to the exterior.

With reference to Fig. 7, the projection length of the end portion toward the outer periphery of the protection member 30 is adjusted between the mold 60 and the position regulating piece 80 at this time depending on a relative relationship between a length of the end portion of the protection member 30 extending from the mold 60 and a distance Q between the mold 60 and the position regulating piece 80. Specifically, when the length of the end portion of the protection member 30 extending from the mold 60 is the same as or less than the distance Q between the mold 60 and the position regulating piece 80, the projection length of the end portion toward the outer periphery of the protection member 30 is approximately a difference between a portion compressed by the mold 60 in the intermediate portion of the protection member 30 and an uncompressed portion. Meanwhile, when the length of the end portion of the protection member 30 extending from the mold 60 is greater than the distance Q between the mold 60 and the position regulating piece 80, and then the end portion is pressed in between the mold 60 and the position regulating piece 80, the pressed nonwoven material 40 bulges around the wire harness main body 22 between the mold 60 and the position regulating piece 80. Accordingly, the greater the length of the end portion of the protection member 30 extending from the mold 60 is than the distance Q between the mold 60 and the position regulating piece 80, the greater can be the projection length of the projecting end portion 34 toward the outer periphery of the protection member 30.

Then, when the intermediate portion of the protection member 30 is hot-pressed similar to the above, some heat is transferred and the adhesive resin is melted to some extent in the projecting end portion 34, thus maintaining the shape above to some degrees. The projecting end portion 34 is heated from the mold 60 side, thus inhibiting heating of wires that extend from the protection member 30.

Thus, adjusting the relative relationship or the like between the length of the end portion of the protection member 30 extending from the mold 60 and the distance Q between the mold 60 and the position regulating piece 80 controls the projection length of the projecting end portion 34 toward the outer periphery of the protection member 30.

The detailed description above of the present invention is presented merely as an example in all aspects and should not limit the present invention. Innumerable modifications not presented are construed to be assumed without deviating from the scope of the present invention.

## Claims

1. A method of producing a wire harness by hot-pressing a nonwoven material in at least a portion of a wire harness main body to form a protection member, the method comprising:
(a) a process of covering a portion of the wire harness main body with the nonwoven material;
(b) a process of placing the nonwoven material in a mold in a state where at least an end portion of the nonwoven material projects from the mold; and
(c) a process of hot-pressing the nonwoven material in the mold to form the protection member.

2. The method of producing the wire harness according to claim 1, wherein, in the process (c), the nonwoven material is hot-pressed in the mold in a state where a position regulating piece is provided in a position opposite to at least the end portion of the nonwoven material projecting from the mold.

3. A wire harness comprising:
a wire harness main body; and
a protection member formed by hot-pressing a nonwoven material in a state where a portion of the wire harness main body is covered by the nonwoven material,
wherein
at least an end portion of the protection member is pushed inward without being hot-pressed and is formed into a projecting end portion projecting toward an outer periphery.

4. The wire harness according to claim 3, further comprising:
at least one component for fixation to a vehicle body attached to an intermediate portion of the protection member.

5. The wire harness according to claim 4, wherein the projecting end portion is provided to each of two end portions of the protection member.

6. The wire harness according to claim 5, wherein only one component for fixation to the vehicle body is provided.

7. The wire harness according to one of claims 4 to 6, wherein a projection length of the projecting end portion toward the outer periphery of the protection member is same as a projection support length of the component for fixation to the vehicle body.
